# EUROPÄISCHE PATENTSCHRIFT

(11) **EP 0 505 358 B1**
(45) Veröffentlichungstag und Bekanntmachung des Hinweises auf die Patenterteilung: **27.04.1994**
(21) Anmeldenummer: 90909329.6
(22) Anmeldetag: 18.06.1990
(51) Int. Cl.: C04B 35/80, C04B 35/10

(54) **FASERVERSTÄRKTER KERAMIKVERBUNDKÖRPER, VERFAHREN ZUR HERSTELLUNG EINES KERAMIKVERBUNDKÖRPERS UND DESSEN VERWENDUNG**
FIBRE-REINFORCED CERAMIC COMPOSITE BODY, PROCESS FOR ITS MANUFACTURED AND ITS USE
CORPS METALLO-CERAMIQUE RENFORCE PAR FIBRES, PROCEDE POUR LA FABRICATION D'UN CORPS METALLO-CERAMIQUE ET SON UTILISATION

(30) Priorität: 15.12.1989 DE 3941360
(43) Veröffentlichungstag der Anmeldung: 30.09.1992
(73) Patentinhaber: Krupp Widia GmbH, 45145 Essen (DE)
(72) Erfinder: KOLASKA, Hans, D-4250 Bottrop (DE); KASSEL, Dieter, D-5810 Witten (DE); DREYER, Klaus, D-4300 Essen 1 (DE)
(74) Vertreter: Vomberg, Friedhelm, Dipl.-Phys.
(86) Internationale Anmeldenummer: DE9000460
(87) Internationale Veröffentlichungsnummer: WO9108994

(56) Entgegenhaltungen:
- EP-A- 0 208 910
- EP-A- 0 247 630

## Beschreibung

Die Erfindung betrifft einen faserverstärkten Keramikverbundkörper, der folgende Bestandteile enthält:
a) 5 bis 40 Massen-% SiC-Whisker
b1) 0,05 bis 3 Massen-% Y₂O₃, SiO₂, MgO, NiO und/oder AlN und/oder
b2) Carbide, Nitride und/oder Carbonitride der Metalle der IVa, Va oder VIa-Gruppe des Periodensystems und/oder Oxide der Metalle der IVa-Gruppe des Periodensystems zu 0,5 bis 40 Massen-%,
c) Rest Al₂O₃ in einer Mindestmenge von 30 Massen-%.

Die Erfindung betrifft ferner ein Verfahren zur Herstellung eines Keramikverbundkörpers der genannten Art, bei dem die Ausgangspulvermischung vermischt, naß vermahlen, getrocknet, granuliert, uniaxial oder kaltisostatisch gepreßt und der so hergestellte Verbundkörper durch Sintern bei 1450 bis 1800°C und anschließendem heißisostatischen Pressen (HIP) unter einem Druck von 5 bis 100 bar behandelt wird.

Schließlich betrifft die Erfindung die Verwendung des Keramikverbundwerkstoffes.

Wie in der DE-Z "ZWF", Zeitschrift für wirtschaftliche Fertigung und Automatisierung, 83. Jahrgang, Seiten 354 bis 359, (1988), beschrieben, führten die Bestrebungen, den Anwendungsbereich keramischer Schneidstoffe zu erweitern, in jüngster Zeit zur Entwicklung SiC-whiskerverstärkter Keramiken auf Al₂O₃-Basis. Die Einlagerung von SiC-Whiskern wirkt sich vor allem positiv auf die mechanischen Eigenschaften und auf das Leistungsverhalten beim Einsatz als Schneidwerkstoff aus. Insbesondere haben whiskerhaltige Proben im Vergleich zu whiskerfreien eine wesentlich höhere Härte, eine höhere Zähigkeitsbelastbarkeit und ein entsprechend geringeres Bruchrisiko.

Darüber hinaus wird in der EP 0 208 910 B1 ein faserverstärktes Keramikmaterial für Werkzeuge vorgeschlagen, das folgende Bestandteile enthält:
(A) 5 bis 60 Gew.-% SiC-Fasern;
(B) 0,1 bis 7 Gew.-% wenigstens eines Oxides, ausgewählt aus der aus CaO, MgO, SiO₂, NiO, Y₂O₃ sowie Lanthanoidoxid bestehenden Gruppe; sowie wenigstens eines der Bestandteile (C) und (D), wobei
(C) 0,05 bis 7 Gew.-% wenigstens einer Komponente bedeutet, welche ausgewählt ist aus einer aus B, C, AlN, B₄C und die Boride des Si, Al, Y und Lanthan umfassenden Gruppe, und
(D) 0,05 bis 40 Gew.-% eines zu den Gruppen IVa, Va sowie VIa des periodischen Systems der Elemente gehörenden Übergangsmetalles bzw. Oxides, Carbides, Nitrides oder Borides desselben einschließlich fester Lösungen derselben bedeutet, und
(E) Rest Al₂O₃ in einer Menge von nicht weniger als 30 Gew.-%.

Demgegenüber ist es Aufgabe der vorliegenden Erfindung, den eingangs genannten Keramikformkörper hinsichtlich seiner mechanischen Eigenschaften zu verbessern. Hierbei sollen insbesondere die Bruchzähigkeit und die Biegefestigkeit, aber auch die Temperaturwechsel- und Hochtemperaturbeständigkeit ebenso verbessert werden wie die Oxidations- bzw. Korrosionsfestigkeit.

Es ist ferner Aufgabe der vorliegenden Erfindung, zur Erreichung des obengenannten Zieles ein geeignetes Verfahren anzugeben, schließlich, eine neue Verwendung für die erfindungsgemäßen Keramikformkörper zu finden.

Diese Aufgabe wird beim faserverstärkten Keramikformkörper durch die im Anspruch 1 angegebenen Merkmale gelöst. Dieser Körper besitzt gegenüber den nach dem Stand der Technik bekannten Verbundkörpern 0,05 bis 5 Massen-%, vorzugsweise 2-Massen-%, eines oder mehrerer Edelmetalle. Unter den Edelmetallen werden die Elemente Silber, Gold, Platin, Iridium, Rhodium, Ruthenium, Palladium, Osmium und Rhenium verstanden, wobei sich vorteilhafterweise insbesondere das Platin und/oder das Palladium empfehlen.

Vorzugsweise werden mindestens 0,1 Masse-% eines oder mehrerer Edelmetalle, insbesondere des Platins und/oder Palladiums verwendet.

Vergleichbar gute Festigkeitseigenschaften erhält man auch dann noch, wenn bis zu 70 Massen-% der genannten Edelmetalle durch Nickel und/oder Cobalt ersetzt sind.

Nach einer Weiterbildung der Erfindung besitzt, bezogen auf die Gesamtmasse, der Keramikverbundkörper 0,5 bis 10 Massen-%, vorzugsweise bis 5 Massen-%, eines oder mehrerer reiner Übergangsmetalle, dies sind die Elemente der IVa bis VIa-Gruppe des Periodensystems, insbesondere Molybdän und/oder Wolfram.

Wenn es wesentlich auf die Wärmeleitfähigkeit ankommt, können die SiC-Whisker bis zu 2/3 ihrer Gesamtmasse durch eingebrachtes SiC-Pulver ersetzt werden.

Eine Verbesserung der Festigkeitseigenschaften ergibt auch die Zugabe von Zirkonium- oder Hafniumoxid bzw. Siliciumnitrid, welche in die Al₂O₃-Matrix eingelagert werden und bis zu 0 bis 20 Massen-% (bezogen auf die Gesamtmasse) ausmachen.

Je nach Verwendungszweck kann insbesondere beim Zerspanen eine Werkstoffverbesserung durch Aufbringen einer oder mehrerer dünner Oberflächenschichten erzielt werden. Diese im Prinzip bekannten Oberflächenschichten bestehen aus Oxiden, Carbiden, Nitriden und/oder Carbonitriden eines oder mehrerer der Elemente der IVa bis VIa-Gruppe des Periodensystems und/oder Al₂O₃ und werden nach dem ebenfalls bekannten CVD- bzw. PVD-Verfahren aufgetragen.

Die erfindungsgemäße Herstellung eines Keramikverbundkörpers ist im Anspruch 9 beschrieben. Wesentliches neues Merkmal ist hierbei die Durchführung des Sinterns und des heißisostatischen Pressens ohne zwischenzeitige Abkühlung in einer Hitze. Durch dieses kombinierte Sinter/HIP-Verfahren wird eine gleichmäßig feine Gefügestruktur erreicht. Die bessere Festigkeit der hergestellten Körper beruht vermutlich auf der günstigen Beeinflussung der Korngrenzenstruktur.

Bei diesem Verfahren müssen die erfindungsgemäßen Produkte vorzugsweise in einer Inertgasatmosphäre, wie z.B. einer Argon- oder Stickstoffatmosphäre, der kombinierten Sinter/HIP-Behandlung unterzogen werden. Die HIP-Temperatur wird etwa gleich der Sintertemperatur gewählt oder liegt bei Werten, die bis zu 100°C niedriger liegen.

Um eine möglichst günstige Verteilung des Edelmetalles zu erhalten, wird dieses vorzugsweise in Form kolloidaler Partikel mit Kristallitgrößen <20 nm gleichmäßig mit den übrigen Bestandteilen der Ausgangspulvermischung vermengt. Nach einer Weiterbildung der Erfindung wird das Edelmetall als kolloides Hydrosol oder kolloides Lyosol in organischen (Aceton oder i-Propanol) oder wäßrigen Lösungen zugegeben.

Eine erfindungsgemäße Verwendung des Keramikverbundwerkstoffes wird insbesondere bei thermisch stark belasteten Körpern in einer oxidierenden und/oder korrosiven Atmosphäre liegen, wie sie insbesondere in Automobilen oder als Gasturbine oder als Schneidkörper für die spanende Bearbeitung vorliegen.

Die verbesserten mechanischen Eigenschaften erfindungsgemäßer Legierungen werden im folgenden anhand von Ausführungsbeispielen erläutert. Es zeigen:
- Fig. 1: das Standzeitverhalten,
- Fig. 2: die Biegefestigkeit und
- Fig. 3: die Verschleißkerbe einer erfindungsgemäßen Legierung jeweils im Vergleich zu einer nach dem Stand der Technik bekannten Legierung.

In einem ersten Ausführungsbeispiel wurden 88% α-Al₂O₃, 10% monoklines CrO₂, 0,5% SiO₂, 0,5% MgO, 0,5% Ni mit einer mittleren Korngröße von ca. 1µm und 0,5% Pd mit einer mittleren Korngröße von ca. 50 nm -Angaben jeweils in Massen-%- in pulverisierter Form gemischt und unter Zusatz von Alkohol als einem Mahlmedium 48 Stunden in einer Trommelmühle vermahlen.

Parallel hierzu werden SiC-Whisker einer 6-stündigen Desagglomeration und Mahlung in Alkohol in einer Trommelmühle unterzogen. Nach der Desagglomeration werden die Whisker durch Absiebung zur Entfernung der Grobanteile klassifiziert. Das Sediment kann nach ca. 10 Stunden Ruhezeit weiterverarbeitet werden.

Durch den beschriebenen kombinierten Sieb-/Sedimentationsvorgang werden restliche Agglomerate und überlange Whisker sowie der Feinanteil entfernt. Verwendet wird eine Fraktion, die überwiegend aus Whisker mit einem Länge/Durchmesser-Verhältnis von ca. 5 bis 15 besteht. Die ausgewählte Whiskerfraktion wird mit dem zuerst beschriebenen Matrixanteil im Verhältnis 80:20 (Matrix:Whisker) miteinander in alkoholischer Suspension vermischt und 2 Stunden in einer Trommelmühle homogenisiert. Hiernach erfolgt die Trocknung durch Destillation sowie eine anschließende Absiebung des Trockenkuchens zur Bereitstellung einer fertigen Pulvermischung, die in Graphitformen zu großen Platten mit einem Durchmesser von 250 bis 300 mm bei Temperaturen von 1700°C bis 1800°C heißgepreßt wird. Aus diesen Platten können durch Trennen und Schleifen verschiedene Wendeschneidplatten herausgearbeitet werden.

Anstelle des hier verwendeten Heißpressens kann alternativ auch die in den Ansprüchen 9 ff. beschriebene Sinter-HIP-Herstellung bei Whiskergehalten bis 15%, vorzugsweise 10% gewählt werden.

Die jeweils herangezogene Vergleichskeramik mit SiC-Whiskern besaß hingegen keine Metallanteile (Ni, Pd), wodurch sich in entsprechender Weise der Aluminiumoxidanteil erhöhte.

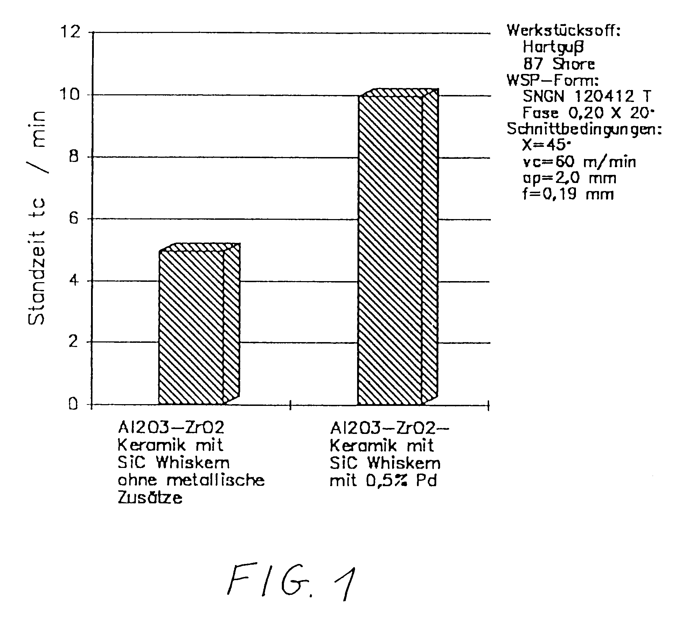

Entsprechend Figur 1 wurden eine Aluminiumoxid-Zirkoniumdioxid-Keramik mit SiC-Whiskern ohne metallische Zusätze, also ohne Palladium, mit einer entsprechenden Keramik mit 0,5% Palladium verglichen. Die Matrix-Ausgangsmengen betrugen in diesem Falle 88,5% α-Al₂O₃, dafür enthielt die Matrix kein Nickel. Wie aus dem Standzeitverhalten nach Figur 1 hervorgeht, konnte eine Standzeitverdopplung erzielt werden. Die einzelnen Schnittbedingungen sind Figur 1 zu entnehmen.

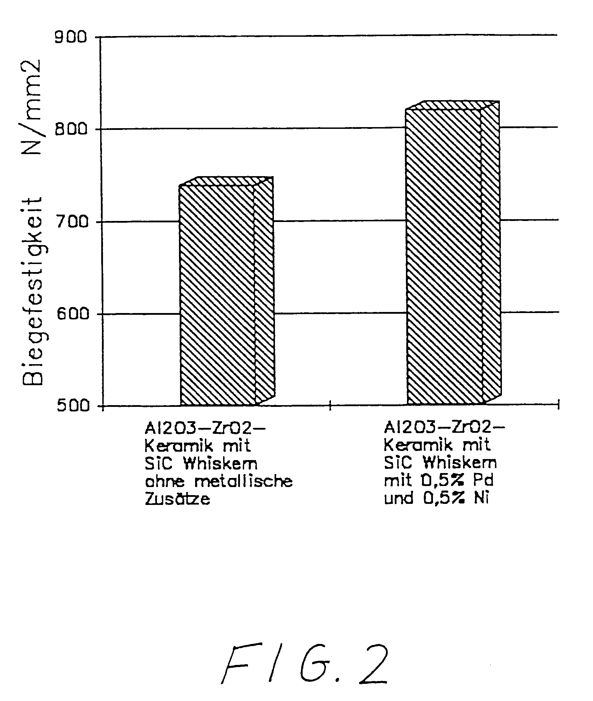

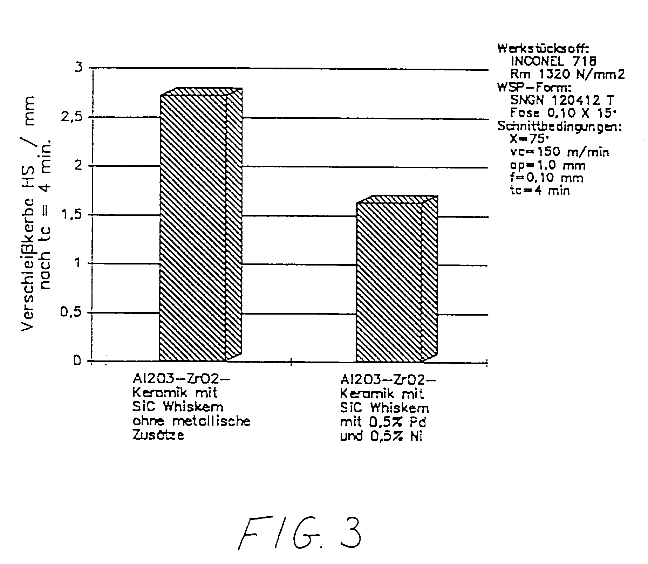

Nach Figuren 2 und 3 wird deutlich, daß die erfindungsgemäße Aluminiumoxid-Zirkoniumdioxid-Keramik mit Siliciumcarbidwhiskern und jeweils 0,5% Palladium und Nickel eine um fast 10% bessere Biegefestigkeit aufweist. Messungen der Verschleißkerbe HS/mm nach t_{c} = 4 Min. ergaben entsprechend Figur 3 ebenfalls eine deutliche Verbesserung bei Verwendung einer erfindungsgemäßen Legierung. Die in Figuren 2 und 3 dargestellten Ergebnisse wurden jeweils beim Drehen im kontinuierlichen Schnitt erhalten.

## Patentansprüche

1. Faserverstärkter Keramikverbundkörper, der folgende Bestandteile enthält
a) 5 bis 40 Massen-% SiC-Whisker
b1) 0,05 bis 3 Massen-% Y₂O₃, SiO₂, MgO, NiO und/oder AlN und/oder
b2) Carbide, Nitride und/oder Carbonitride der Metalle der IVa, Va oder VIa-Gruppe des Periodensystems und/oder Oxide der Metalle der IVa-Gruppe des Periodensystems zu 0,5 bis 40 Massen-%,
c) Rest Al₂O₃ in einer Mindestmenge von 30 Massen-%,
**gekennzeichnet durch**
0,05 bis 5 Massen-% eines oder mehrerer Edelmetalle.

2. Keramikverbundkörper nach Anspruch 1, dadurch gekennzeichnet, daß Platin und/oder Palladium enthalten sind.

3. Keramikverbundkörper nach Anspruch 1 oder 2, dadurch gekennzeichnet, daß mindestens 0,1 Massen-% eines oder mehrerer Edelmetalle, vorzugsweise Platin und/oder Palladium enthalten sind.

4. Keramikverbundkörper nach einem der Ansprüche 1 bis 3, dadurch gekennzeichnet, daß bis zu 70 Massen-% der Edelmetalle durch Nickel und/oder Cobalt ersetzt sind.

5. Keramikverbundkörper nach einem der Ansprüche 1 bis 4, dadurch gekennzeichnet, daß 0,5 bis 10 Massen-%, vorzugsweise bis 5 Massen-% - bezogen auf die Gesamtmasse - eines oder mehrerer reiner Übergangsmetalle (Elemente der IVa bis VIa-Gruppe des Periodensystems), insbesondere Molybdän und/oder Wolfram, enthalten sind.

6. Keramikverbundkörper nach einem der Ansprüche 1 bis 5, dadurch gekennzeichnet, daß die SiC-Whisker bis zu 2/3 ihrer Gesamtmasse durch eingebrachtes SiC-Pulver ersetzt sind.

7. Keramikverbundkörper nach einem der Ansprüche 1 bis 6, dadurch gekennzeichnet, daß 0 bis 20 Massen-% ZrO₂, HfO₂ und/oder Si₃N₄ enthalten sind.

8. Keramikverbundkörper nach einem der Ansprüche 1 bis 7, gekennzeichnet durch eine oder mehrere dünner Oberflächenschichten, bestehend aus Oxiden, Carbiden, Nitriden und/oder Carbonitriden eines oder mehrerer der Elemente der IVa bis VIa-Gruppe des Periodensystems und/oder Al₂O₃.

9. Verfahren zur Herstellung eines Keramikverbundkörpers nach einem der Ansprüche 1 bis 8, bei dem die Ausgangspulvermischung vermischt, naß vermahlen, getrocknet, granuliert, uniaxial oder kaltisostatisch gepreßt und der so hergestellte Verbundkörper durch Sintern bei 1450 bis 1800°C und anschließendem heißisostatischen Pressen (HIP) unter einem Druck von 5 bis 100 bar behandelt wird, dadurch gekennzeichnet, daß das Sintern und das HIP ohne zwischenzeitige Abkühlung in einer Hitze durchgeführt werden.

10. Verfahren nach Anspruch 9, dadurch gekennzeichnet, daß die kombinierte Sinter/HIP-Behandlung in einer Inertgasatmosphäre, vorzugsweise einer Argon- oder Stickstoffatmosphäre oder unter Vakuum durchgeführt wird.

11. Verfahren nach Anspruch 9 oder 10, dadurch gekennzeichnet, daß die HIP-Temperatur bis zu 100°C unter der Sintertemperatur liegt.

12. Verfahren nach einem der Ansprüche 9 bis 11, dadurch gekennzeichnet, daß das Edelmetall in Form kolloidaler Partikel mit Kristallitgrößen <20 nm gleichmäßig mit den übrigen Bestandteilen der Ausgangspulvermischung vermengt wird.

13. Verfahren nach Anspruch 12, dadurch gekennzeichnet, daß das Edelmetall als kolloidales Hydrosol oder kolloides Lyosol in organischen (Aceton, i-Propanol) oder wäßrigen Lösungen zugegeben wird.

14. Verwendung des Keramikverbundwerkstoffes nach einem der Ansprüche 1 bis 8 als Werkstoff für thermisch stark belastete Körper in einer oxidierenden und/oder korrosiven Atmosphäre, insbesondere im Automobilbau, als Gasturbine oder als Schneidkörper für die spanende Bearbeitung.

## Claims

1. Fibre-reinforced ceramic composite body containing the following constituents:
a) 5 to 40% mass SiC whiskers
b1) 0.05 to 3% mass Y₂O₃, SiO₂, MgO, NiO and/or AlN and/or
b2) 0.5 to 40% mass of carbides, nitrides and/or carbonitrides of the metals in group IVa, Va or VIa of the periodic system and/or oxides of the metals in group IVa of the periodic system,
c) the remainder a minimum amount of 30% mass Al₂O₃,
characterised by 0.05 to 5% mass of one or several noble metals.

2. Ceramic composite body according to Claim 1, characterised in that platinum and/or palladium are included.

3. Ceramic composite body according to Claim 1 or 2, characterised in that at least 0.1% mass of one or several noble metals, in particular platinum and/or palladium, are included.

4. Ceramic composite body according to one of Claims 1 to 3, characterised in that up to 70% mass of the noble metals are replaced by nickel and/or cobalt.

5. Ceramic composite body according to one of Claims 1 to 4, characterised in that 0.5 to 10% mass, preferably up to 5% mass - calculated on the basis of total mass - , of one or several pure transition metals (elements of groups IVa to VIa in the periodic system), in particular molybdenum and/or tungsten, are included.

6. Ceramic composite body according to one of Claims 1 to 5, characterised in that the SiC whiskers are replaced to 2/3 of their total mass by introduced SiC powder.

7. Ceramic composite body according to one of Claims 1 to 6, characterised in that 0 to 20% mass ZrO₂, HfO₂ and/or Si₃N₄ are included.

8. Ceramic composite body according to one of Claims 1 to 7, characterised by one or several thin surface coatings composed of oxides, carbides, nitrides and/or carbonitrides of one or several of the elements in groups IVa to VIa of the periodic system and/or Al₂O₃.

9. Process for the production of a ceramic composite body according to one of Claims 1 to 8, wherein the initial power mixture is mixed, ground wet, dried, granulated, subjected to uniaxial pressing or cold isostatic pressing, and the composite body thus produced is processed by sintering at 1450° to 1800°C and subsequent hot isostatic pressing (HIP) at a pressure of 5 to 100 bar, characterised in that the sintering and HIP processes are conducted in heat without intermediate cooling.

10. Process according to Claim 9, characterised in that the combined sintering/HIP treatment is conducted in an atmosphere of inert gas, preferably an atmosphere of argon or nitrogen, or in a vacuum.

11. Process according to Claim 9 or 10, characterised in that the HIP temperature is up to 100°C below the sintering temperature.

12. Process according to one of Claims 9 to 11, characterised in that the noble metal in the form of colloidal particles with crystallite grain sizes of <20 nm is evenly mixed with the remaining constituents of the initial powder mixture.

13. Process according to Claim 12, characterised in that the noble metal is added in the form of colloidal hydrosol or colloidal lyosol in organic (acetone, i-propanol) or aqueous solutions.

14. Application of the ceramic composite material according to one of Claims 1 to 8 as material for bodies exposed to high thermal stresses in an oxidising and/or corrosive atmosphere, in particular in automotive construction, as gas turbine or as cutting body for machining processes.

## Revendications

1. Corps composite céramique renforcé par fibres, contenant les composants suivants:
a) 5 à 40 % en masse de fibres (whisker) de SiC
b1) 0,05 à 3 % en masse de Y₂O₃, SiO₂, MgO, NiO et/ou AlN et/ou
b2) Carbures, nitrures et/ou carbonitrures des métaux des groupes IVa, Va, VIa, du système périodique et/ou oxydes des métaux du groupe IVa du système périodique, à raison de 0,5 à 40 % en masse
c) pour le reste, Al₂O₃ en quantité minimale de 30 % en masse,
caractérisé par
0,05 à 5 % en masse d'un ou plusieurs métaux nobles.

2. Corps composite céramique suivant la revendication 1, caractérisé en ce que du platine et/ou du palladium sont contenus.

3. Corps composite céramique suivant la revendication 1 ou la revendication 2, caractérisé en ce qu'un ou plusieurs métaux précieux, de préférence du platine et/ou du palladium, sont contenus, en quantité d'au moins 0,1 % en masse.

4. Corps composite céramique suivant l'une quelconque des revendications 1 à 3, caractérisé en ce que jusqu'à 70 % en masse des métaux précieux sont remplacés par du nickel et/ou du cobalt.

5. Corps composite céramique suivant l'une quelconque des revendications 1 à 4, caractérisé an ce que 0,5 à 10 % en masse, de préférence jusqu'à 5 % en masse, - rapporté à la masse totale - d'un ou plusieurs métaux de transition purs (éléments des groupes IVa à VIa du système périodique), en particulier du molybdène et/ou du tungstène, sont contenus.

6. Corps composite céramique suivant l'une quelconque des revendications 1 à 5, caractérisé en ce que les fibres (whiskers) de SiC sont remplacées, à concurrence des 2/3 de la masse totale, par introduduction de poudre de SiC.

7. Corps composite céramique suivant l'une quelconque des revendications 1 à 6, caractérisé en ce que 0 à 20 % en masse de ZrO₂, HfO₂, et/ou Si₃N₄ sont contenus.

8. Corps composite céramique suivant l'une quelconque des revendications 1 à 7, caractérisé par une ou plusieures couches fines de la surface externe, constituées d'oxydes, carbures, nitrures et/ou carbonitrures d'un ou plusieurs des éléments des groupes IVa à VIa du système périodique, et/ou d'Al₂O₃.

9. Procédé pour la fabrication d'un corps composite céramique suivant l'une quelconque des revendications 1 à 8, dans le cas duquel le mélange de poudre initial est mélangé, moulu en phase humide, séché, granulé, comprimé de façon iniaxiale et isostatique à froid, le corps composite ainsi obtenu est traité par frittage de 1450° à 1800°C, puis finalement par compression isostatique à chaud (HIP) sous une pression de 5 à 100 bar, caractérisé en ce que le frittage et le HIP sont effectués en une seule chauffe, sans refroidissement intermédiaire.

10. Procédé suivant la revendication 9, caractérisé en ce que le traitement combiné frittage/HIP est exécuté sous atmosphère de gaz inerte, de préférence sous une l'atmosphère d'argon ou d'azote, ou sous vide.

11. Procédé suivant la revendication 9 ou la revendication 10, caractérisé en ce que la température HIP est jusqu'à 100°C inférieure à la température de frittage.

12. Procédé suivant l'une quelconque des revendications 9 à 11, caractérisé en ce que le métal précieux, sous la forme de particules colloïdales présentant des grosseurs de cristallite < 20 nm, est mélangé de façon régulière avec les autres composants du mélange de poudre initial.

13. Procédé suivant la revendication 12, caractérisé en ce que le métal noble est ajouté sous la forme d'un hydrosol colloïdal ou d'un lyosol colloïdal dans des solutions organiques (acétone, i-propanol) ou aqueuses.

14. Utilisation du matériau composite céramique suivant l'une quelconque des revendications 1 à 8, comme matériau pour des corps à forte sollicitation thermique, en atmosphère oxydante et/ou corrosive, en particulier en construction automobile, sous la forme de turbines à gaz ou sous la forme de corps de coupe pour l'usinage avec production de copeaux.
